(19) Europäisches Patentamt
European Patent Office
Office européen des brevets

(11) **EP 4 217 245 B1**

(12) **FASCICULE DE BREVET EUROPEEN**

(45) Date de publication et mention de la délivrance du brevet:
**28.08.2024 Bulletin 2024/35**

(21) Numéro de dépôt: **21746774.5**

(22) Date de dépôt: **06.07.2021**

(51) Classification Internationale des Brevets (IPC):
***B60W 30/16*** *(2020.01)*

(52) Classification Coopérative des Brevets (CPC):
**B60W 30/16;** B60W 2554/404; B60W 2554/4042; B60W 2556/20; B60W 2720/106

(86) Numéro de dépôt international:
**PCT/FR2021/051250**

(87) Numéro de publication internationale:
**WO 2022/064112 (31.03.2022 Gazette 2022/13)**

(54) **PROCÉDÉ ET DISPOSITIF DE CONDUITE AUTONOME D'UN VÉHICULE TERRESTRE À MOTEUR, APPELÉ ÉGO-VÉHICULE, PAR RÉGULATION DE VITESSE ADAPTATIVE FONDÉE SUR UNE ACCÉLÉRATION CONSIGNE**

VERFAHREN UND VORRICHTUNG ZUM AUTONOMEN FAHREN EINES MOTORISIERTEN LANDFAHRZEUGS, GENANNT EGO-FAHRZEUG, DURCH ADAPTIVE GESCHWINDIGKEITSREGELUNG AUF BASIS EINER SOLLBESCHLEUNIGUNG

METHOD AND DEVICE FOR AUTONOMOUSLY DRIVING A MOTORISED LAND VEHICLE, CALLED EGO VEHICLE, BY ADAPTIVE CRUISE-CONTROL BASED ON A SETPOINT ACCELERATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.09.2020 FR 2009723**

(43) Date de publication de la demande:
**02.08.2023 Bulletin 2023/31**

(73) Titulaire: **Stellantis Auto SAS 78300 Poissy (FR)**

(72) Inventeurs:
• VIVET, Luc
**75016 PARIS 16 (FR)**
• VARNIER, Matthieu
**78320 LA VERRIERE (FR)**

(56) Documents cités:
WO-A1-2020/120868    DE-A1- 102006 056 629
GB-A- 2 571 587    US-A1- 2019 263 402

**Description**

L'invention concerne un procédé et un dispositif de conduite autonome d'un véhicule terrestre à moteur, appelé égo-véhicule, par régulation de vitesse adaptative fondée sur une accélération consigne.

On entend par « véhicule » tout type de véhicule tel qu'un véhicule automobile, un cyclomoteur, une motocyclette, un robot de stockage dans un entrepôt, etc. On entend par « conduite autonome » d'un « véhicule autonome » tout procédé apte à assister la conduite du véhicule. Le procédé peut ainsi consister à diriger partiellement ou totalement le véhicule ou à apporter tout type d'aide à une personne physique conduisant le véhicule. Le procédé couvre ainsi toute conduite autonome, du niveau 0 au niveau 5 dans le barème de l'OICA, pour Organisation International des Constructeurs Automobiles.

Les systèmes et dispositifs de régulation de vitesse adaptative fondée sur une accélération consigne sont connus. Les organes de propulsion rendent possible la régulation de la vitesse de l'ego-véhicule fondée sur l'accélération de consigne, calculée par exemple à partir de l'écart entre une vitesse consigne, par exemple définie par le conducteur, et la vitesse, mesurée, de l'égo-véhicule. Plus l'écart de vitesse est grand, plus forte sera l'accélération.

Les organes de perception de l'environnement (caméra, RADAR, LIDAR, ...) rendent possible l'adaptation de la régulation en fonction de la présence et de la vitesse d'un véhicule cible, véhicule qui précède l'égo-véhicule. L'égo-véhicule et le véhicule cible circulent sur la même voie de circulation. Cependant ces organes perdent sporadiquement la perception selon des situations de roulage (par exemple éblouissement, échos RADAR, pente, tangage du véhicule, ...). Ainsi, lors d'une perte de perception, le système de régulation de vitesse réagit actuellement selon deux modes opératoires. Le premier mode opératoire est de faire l'hypothèse que le véhicule cible existe, de maintenir la vitesse de l'égo véhicule constante et d'attendre une nouvelle détection du véhicule cible pour ensuite adapter la vitesse de l'égo-véhicule. Le deuxième mode opératoire est de faire l'hypothèse que le véhicule cible n'existe plus. Dans ce dernier cas si la vitesse de l'égo véhicule est sensiblement inférieure à la vitesse de consigne, alors l'accélération de consigne varie brusquement et le système de régulation de vitesse va accélérer fortement l'égo-véhicule. Le cas plus dangereux est lorsque l'égo-véhicule accélère de nouveau alors qu'un véhicule cible n'est plus détecté et qui, avant la perte de détection, décélère. Dans ce cas la distance, ou le temps de trajet, entre l'égo-véhicule et le véhicule cible diminue fortement et oblige au conducteur à reprendre la main.

On connait par le document US 2019263402 A1 un dispositif et un procédé de suivi de cible sur un véhicule cible détecté. On connait par le document GB 2571587 A un procédé de commande de suivi d'un véhicule cible. On connait par le document DE 102006056629 A1 un procédé de régulation de vitesse et/ou de distance pour maintenir une distance prédéterminée avec un véhicule cible détecté.

Un objet de la présente invention est de limiter les variations d'accélération brusques de l'égo véhicule et de maintenir une distance de sécurité lorsque le véhicule cible n'est plus détecté.

A cet effet, un premier aspect de l'invention concerne un procédé de conduite autonome d'un véhicule terrestre à moteur, appelé égo-véhicule, par régulation de vitesse adaptative fondée sur une accélération consigne. Le procédé comporte les étapes de :

> a) détermination d'une accélération d'un véhicule cible ;
> b) calcul d'un indicateur pour le véhicule cible configuré pour caractériser une probabilité d'existence du véhicule cible ;
> c) détermination d'une accélération de consigne maximale à partir de l'indicateur et configurée pour borner l'accélération de consigne ;
> d) détermination d'une régulation de vitesse à partir de l'accélération de consigne maximale et de l'accélération de consigne.

Ainsi, la vitesse régulée de l'égo-véhicule est compatible avec la vitesse du véhicule cible. La distance, ou le temps de trajet, entre l'égo-véhicule et le véhicule cible est sensiblement maintenue constante. Il n'y a pas de variation brusque de l'accélération consigne. L'accélération de consigne sera bornée par une accélération de consigne maximale fondée sur la probabilité d'existence du véhicule cible. Par exemple, plus la probabilité d'existence du véhicule cible est faible plus grande pourra être l'accélération de consigne.

Selon l'invention la détermination de l'accélération de consigne maximale est obtenue par l'application d'un gabarit à l'indicateur, le gabarit étant fonction de l'accélération du véhicule cible.

Le gabarit détermine l'accélération de consigne maximale en fonction de la valeur de l'indicateur, donc de la probabilité d'existence. Ce gabarit est dynamique, son profil évolue avec la dernière détermination de l'accélération du véhicule cible. Ainsi, si la probabilité d'existence est grande, l'accélération de consigne maximale est proche de l'accélération du véhicule cible. Le gabarit détermine aussi une décélération maximale.

Avantageusement, le gabarit présente deux plateaux reliés par une courbe. Le premier plateau est déterminé pour un indicateur compris entre 0 et un seuil bas d'existence prédéfini, et est configuré pour caractériser un seuil haut d'accélération. Le deuxième plateau est déterminé pour un indicateur compris entre un seuil haut d'existence et 1, et est configuré pour caractériser l'accélération du véhicule cible.

Ainsi, pour une faible probabilité d'existence du véhicule cible, l'accélération de consigne maximale est une valeur proche de l'accélération maximale du véhicule ou d'une valeur prédéfinie, le seuil haut d'accélération. Pour une forte probabilité d'existence du véhicule cible, l'accélération de consigne maximale est une valeur proche de l'accélération du véhicule cible. Entre ces deux cas extrêmes (faible probabilité d'existence, forte probabilité d'existence), le profil du gabarit dépend du seuil haut d'accélération et de l'accélération du véhicule cible. Pour un indicateur qui varie continûment avec le temps d'un seuil haut d'existence à un seuil bas d'existence, l'accélération de consigne maximale varie continûment d'une valeur proche de l'accélération du véhicule cible vers une valeur proche de l'accélération maximale. Les variations d'accélération maximale de consigne en sont ainsi lissées en fonction de l'indicateur.

Avantageusement, le deuxième plateau est configuré pour caractériser l'accélération du véhicule cible additionnée d'une marge d'accélération prédéfinie.

Comme toute mesure étant entaché d'une incertitude, dans le cas présent la mesure est la détermination de l'accélération du véhicule cible, l'invention ajoute une marge d'accélération prédéfinie à la détermination de l'accélération du véhicule cible. Ainsi, le régulateur de vitesse adaptatif fondé sur une accélération consigne et sur une accélération de consigne maximale est typé. Ce typage rend l'égo-véhicule plus ou moins sportif / dynamique lors d'une forte probabilité de d'existence du véhicule cible.

Avantageusement, lorsque l'indicateur est compris entre le seuil bas d'existence et le seuil haut d'existence, l'accélération maximal du gabarit est fonction de la valeur de l'indicateur, de la valeur de l'accélération véhicule cible majoré d'une marge d'accélération prédéfinie

Ainsi, le régulateur de vitesse adaptatif fondé sur une accélération consigne et sur une accélération de consigne maximale est typé, c'est-à-dire plus ou moins sportif / dynamique sur toute la plage de valeur que peut rendre l'indicateur.

Avantageusement, la détermination est du gabarit est mise à jour à chaque nouvelle détermination de l'accélération du véhicule cible.

Ainsi, le régulateur de vitesse adaptatif fondé sur une accélération consigne et sur une accélération de consigne maximale s'adapte dès que possible à la vitesse et l'accélération du véhicule cible

Avantageusement, le calcul de l'indicateur pour le véhicule cible est mise à jour continuellement.

Ainsi, l'accélération maximale de consigne, qui dépend du profil du gabarit, est mis à jour continuellement et est en accord avec la probabilité d'existence.

Un deuxième aspect de l'invention concerne un dispositif comprenant une mémoire associée à au moins un processeur configuré pour mettre en oeuvre le procédé selon le premier aspect de l'invention.

L'invention concerne aussi un véhicule terrestre à moteur comportant le dispositif.

L'invention concerne aussi un programme d'ordinateur comprenant des instructions adaptées pour l'exécution des étapes du procédé lorsque ledit programme est exécuté par au moins un processeur.

D'autres caractéristiques et avantages de l'invention ressortiront de la description des modes de réalisation non limitatifs de l'invention ci-après, en référence aux figures annexées, sur lesquelles :

[Fig. 1] illustre schématiquement un gabarit selon un exemple particulier de la présente invention.

[Fig. 2] illustre schématiquement un procédé de conduite autonome d'un véhicule terrestre à moteur, appelé égo-véhicule, par régulation de vitesse adaptative fondée sur une accélération consigne, selon un exemple particulier de réalisation de la présente invention.

[Fig. 3] illustre schématiquement un dispositif, selon un exemple particulier de réalisation de la présente invention.

L'invention est décrite ci-après dans son application, non limitative, au cas d'un véhicule automobile autonome circulant sur une route. D'autres applications telles qu'un robot dans un entrepôt de stockage ou encore une motocyclette sur une route de campagne sont également envisageables.

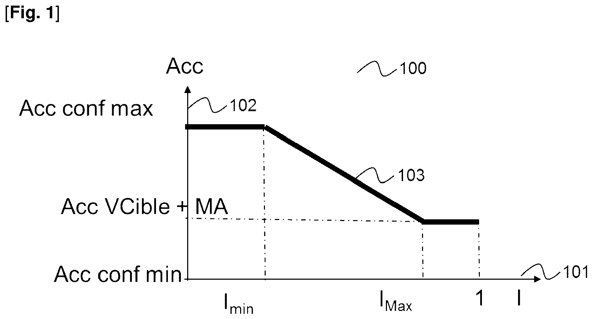

La **figure** 1 illustre schématiquement un gabarit 100 selon un exemple particulier de la présente invention.

L'axe des abscisses 101 représente l'axe de l'indicateur pour le véhicule cible configuré pour caractériser une probabilité d'existence du véhicule cible. L'indicateur varie entre 0 et 1 (0% de probabilité à 100% de probabilité). Sont représentés un seuil bas d'existence, $I_{min}$, et un seuil haut d'existence $I_{Max}$. $I_{min}$ et $I_{Max}$ peuvent prendre toute valeur entre 0 et 1 inclus. Dans un mode opératoire, $I_{min}$ vaut environ 0,20 et $I_{max}$ vaut 0,8.

L'axe des ordonnées 102 représente l'accélération qui peut prendre toute valeur réelle, en particulier cette accélération peut être comprise entre -15 m/s² et 15 m/s². Sont représentés, le seuil haut d'accélération, Acc conf max, l'accélération du véhicule cible, Acc VCible, augmenté de la marge d'accélération prédéfinie, MA, et un seuil bas d'accélération, Acc conf min.

Le seuil haut d'accélération, Acc conf max, correspond à une accélération maximum prédéfinie que l'accélération de consigne maximale ne doit pas dépasser soit pour des raisons de confort soit pour des raisons de sécurité. Par exemple, le seuil haut d'accélération peut prendre pour valeur 1,5 m/s$^2$.

Le seuil bas d'accélération, Acc conf min, correspond à une accélération minimum prédéfinie à ne pas être inférieure. Pour des raisons de confort, la décélération du véhicule obtenue par le régulateur de vitesse ne doit être inférieur au seuil bas d'accélération. Par exemple, le seuil bas d'accélération peut prendre pour valeur - 3,5 m/s$^2$. Ce seuil bas détermine une accélération de consigne minimale.

Dans le mode opératoire préféré, cette accélération de consigne minimale est constante et donc indépendante de l'indicateur. Dans un autre mode opératoire, l'accélération de consigne minimale peut dépendre de l'indicateur tout comme l'accélération de consigne maximale.

L'accélération du véhicule cible, Acc VCible, est déterminé dans le procédé qui est décrit ci-après. En situation normale de roulage, l'accélération d'un véhicule circulant sur une voie de circulation est comprise entre -3,5 et 1,5 m/s$^2$. La marge d'accélération prédéfinie, MA, peut être positive ou négative. Dans un mode opératoire, il peut prendre pour valeur 0,1 m/s$^2$. L'accélération de consigne maximale, représentée par la courbe 103, est alors un peu plus élevé lors d'une forte probabilité d'existence. En effet, une des raisons de perte de détection du véhicule cible est que le véhicule cible accélère et devient hors du champ de perception. Avoir une marge d'accélération prédéfinie positive rend plus dynamique et plus anticipatif le système de régulation de vitesse.

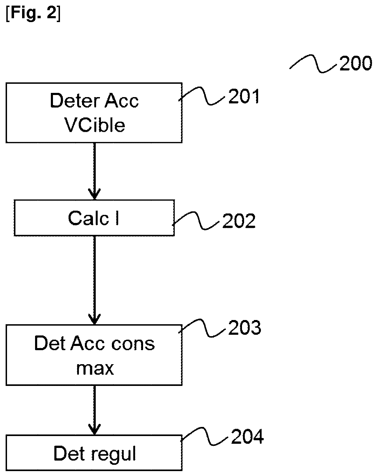

La **figure** 2 illustre schématiquement un procédé 200 de conduite autonome d'un véhicule terrestre à moteur, appelé égo-véhicule, par régulation de vitesse adaptative fondée sur une accélération consigne, selon un exemple particulier de réalisation de la présente invention.

L'étape 201, Det Acc VCible, détermine l'accélération du véhicule cible, le véhicule précédent l'égo-véhicule circulant dans la même voie de circulation que l'égo-véhicule.

Les organes de perception de l'environnement (caméra, RADAR, LIDAR, ...) embarqués dans l'égo-véhicule, les capteurs liés à la mesure de dynamique de l'égo-véhicule (position/angle, vitesse/vitesse angulaire, accélération/accélération angulaire ...) et les traitements classiques associés peuvent déterminer l'accélération du véhicule par effet Doppler, par le traitement temporelle des images capturées, par traitement temporelle des mesures de la distance/vitesse/accélération entre l'égo-véhicule et le véhicule cible.

Temporairement, et par intermittence, ces organes de perception de l'environnement peuvent ne plus détecter ou ne plus mesurer une caractéristique du véhicule cible. La détermination de l'accélération du véhicule est ainsi dégradée. Typiquement, les images capturées par les caméras sont dégradées lors de certaines conditions météorologiques comme, par exemple, la pluie, la neige, l'ensoleillement, ... Egalement, suite à un écho, le mesures issues d'un radar sont dégradées.

L'étape 202, Calc I, calcule l'indicateur pour le véhicule configuré pour caractériser un probabilité d'existence du véhicule cible. Classiquement, à chaque traitement d'information de données d'un organe de perception de l'environnement est associé une information configurée pour caractérisé la confiance du traitement. Des techniques classiques de fusion de données rendent possible le calcul d'un indicateur pour le véhicule configuré pour caractériser un probabilité d'existence du véhicule cible.

Par exemple, le traitement des images capturées par une caméra identifie un véhicule cible pendant une période donnée et détermine une première accélération du véhicule cible. En même temps, le traitement des données issues d'un RADAR détermine une deuxième accélération du véhicule cible. Si la première accélération du véhicule cible est sensiblement égale à la deuxième accélération du véhicule cible. La probabilité de d'existence du véhicule cible est très forte. Elle peut être fixée à 70% au moment de la première détermination. Ce taux va progresser, linéairement avec le temps par exemple, tant que la première accélération du véhicule cible est sensiblement égale à la deuxième accélération du véhicule. Ce taux peut chuter progressivement à 50% si une des déterminations n'est plus disponible (exemple un éblouissement, ne permettant pas à la caméra de détecter le véhicule cible). Ce taux peut tendre vers 0% si pendant une durée, on ne détermine plus d'accélération du véhicule cible.

Dans un mode de réalisation, cet indicateur est déterminé continuellement même s'il n'y pas de nouvelle détermination de l'accélération du véhicule cible. Pour cela on va prendre en compte au moins une partie de l'historique des dernières mesures et déterminations, typique sur une fenêtre temporelle. Par exemple, l'historique peut prendre en compte les mesures et déterminations disponibles lors des trois dernières secondes. En fonction de cet historique, l'indicateur va croitre ou décroitre. Par exemple, si l'indicateur est proche de 1 et si le véhicule cible accélère fortement pour disparaitre de la perception, l'indicateur va décroitre rapidement vers 0, le véhicule étant devenu hors de portée. Inversement, si l'indicateur est proche de 1 et si le véhicule cible décélère fortement et disparaît tout ou en partie de la perception, l'indicateur va décroitre faiblement, il faut prendre en compte la décélération du véhicule cible et adapter l'accélération consigne pour éviter un choc.

Dans l'étape 203, Det Acc cons max, on détermine d'une accélération de consigne maximale à partir de l'indicateur. Cette accélération de consigne maximale est ensuite utilisée pour limiter l'accélération de consigne dans la régulation de vitesse, limitant les variations brusques d'accélération de l'égo-véhicule lorsqu'on ne détermine plus l'accélération du véhicule cible.

Dans un mode opératoire, on détermine un gabarit comme celui de la figure 1. Selon la valeur de l'indicateur, le gabarit détermine une accélération de consigne maximale. Par exemple si l'indicateur est inférieur au seuil bas d'existence, $I_{min}$, l'accélération de consigne maximale est égale à Acc conf max. Si l'indicateur est supérieur un seuil haut d'existence, $I_{Max}$, l'accélération de consigne maximale est égale à l'accélération du véhicule cible augmenté d'une marge. Si l'indicateur est compris entre le seuil bas d'existence et le seuil haut d'existence, une courbe, ou plus particulièrement un segment dans la figure 1, relie l'accélération du véhicule cible augmenté d'une marge à l'accélération maximum prédéfinie, Acc conf max. Ce segment peut avoir pour équation :

$$Acc\,cons\,max = \frac{(Ac\,VCible + \varepsilon) - Acc\,conf\,max}{I_{Max} - I_{min}}I$$
$$+ I_{Max}\frac{(Ac\,VCible + \varepsilon) - Acc\,conf\,max}{I_{Max} - I_{min}}$$

Ainsi, avec cette équation, suivant la valeur de l'indicateur I, le gabarit détermine une accélération de consigne maximale, Acc cons max.

Par exemple, si on n'arrive plus à déterminer l'accélération du véhicule cible, on prend soit la dernière valeur connue soit une extrapolation à partir des dernières valeurs connues. Si l'indicateur est compris entre $I_{min}$ et $I_{Max}$, l'accélération de consigne maximale est fonction de l'accélération du véhicule cible, de la marge et d'un seuil haut d'accélération prédéfini. Ainsi, le gabarit détermine à chaque valeur de l'indicateur une valeur d'accélération de consigne maximale.

Dans l'étape 204, on détermine une régulation de vitesse à partir de l'accélération de consigne maximale et de l'accélération de consigne. Dans un mode opératoire préféré, l'accélération de consigne classiquement déterminée par les systèmes de régulation de vitesse adaptative sera bornée par l'accélération de consigne maximale. Si l'accélération de consigne est supérieure à l'accélération de consigne maximale, alors la régulation de vitesse adaptative prend l'accélération de consigne maximale comme accélération de consigne. Si l'accélération de consigne inférieure à l'accélération de consigne minimale, alors la régulation de vitesse adaptative prend l'accélération de consigne minimale comme accélération de consigne.

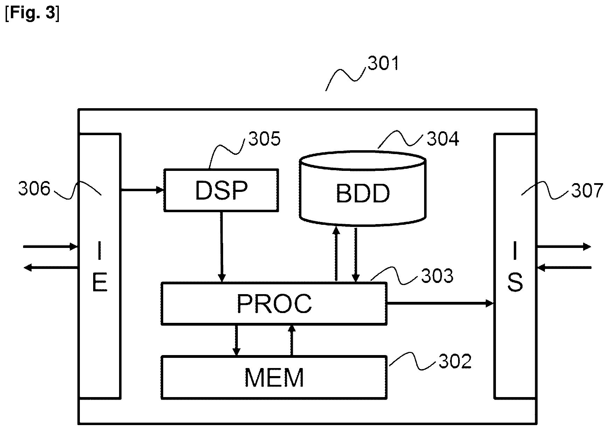

La **figure** 3 représente un exemple de dispositif 301 compris dans le véhicule, dans un réseau (« cloud ») ou dans un serveur. Ce dispositif 301 peut être utilisé en tant que dispositif centralisé en charge d'au moins certaines étapes du procédé décrit ci-avant en référence à la figure 2. Dans un mode de réalisation, il correspond à un calculateur de conduite autonome.

Dans la présente invention, le dispositif 301 est compris dans le véhicule.

Ce dispositif 301 peut prendre la forme d'un boitier comprenant des circuits imprimés, de tout type d'ordinateur ou encore d'un téléphone mobile (« smartphone »).

Le dispositif 301 comprend une mémoire vive 302 pour stocker des instructions pour la mise en oeuvre par un processeur 303 d'au moins une étape du procédé tel que décrit ci-avant. Le dispositif comporte aussi une mémoire de masse 304 pour le stockage de données destinées à être conservées après la mise en oeuvre du procédé.

Le dispositif 301 peut en outre comporter un processeur de signal numérique (DSP) 305. Ce DSP 305 reçoit des données pour mettre en forme, démoduler et amplifier, de façon connue en soi ces données.

Le dispositif 301 comporte également une interface d'entrée 306 pour la réception des données mises en oeuvre par le procédé selon l'invention et une interface de sortie 307 pour la transmission des données mises en oeuvre par le procédé selon l'invention.

La présente invention ne se limite pas aux formes de réalisation décrites ci-avant à titre d'exemples ; elle s'étend à d'autres variantes.

Ainsi, on a décrit ci-avant un exemple de réalisation dans lequel la détermination de l'accélération du véhicule cible était assurée par les organes de perception de l'égo-véhicule et les capteurs de la dynamique du véhicule de l'égo-véhicule. Bien sûr, cette détermination peut être assurée par une communication basée par un lien radiofréquence. Par exemple, l'égo-véhicule peut communiquer avec le véhicule cible, le véhicule cible transmettant sa vitesse et son accélération.

Des équations et calculs ont en outre été détaillés. L'invention n'est pas limitée à la forme de ces équations et calcul, et s'étend à tout type d'autre forme mathématiquement équivalente.

**Revendications**

1. Procédé de conduite autonome d'un véhicule terrestre à moteur, appelé égo-véhicule, par régulation de vitesse adaptative fondée sur une accélération consigne, le procédé comportant les étapes de :

    a) détermination (201) d'une accélération d'un véhicule cible ;
    b) calcul (202) d'un indicateur pour le véhicule cible configuré pour caractériser une probabilité d'existence du véhicule cible ;
    c) détermination (203) d'une accélération de consigne maximale à partir de l'indicateur et configurée pour borner l'accélération de consigne ;
    d) détermination (204) d'une régulation de vitesse à partir de l'accélération de consigne maximale et de l'accélération de consigne ;

    procédé dans lequel la détermination de l'accélération de consigne maximale est obtenue par l'application d'un gabarit (100) à l'indicateur, le gabarit étant fonction de l'accélération du véhicule cible.

2. Procédé selon la revendication 1, dans lequel le gabarit (100) présente deux plateaux reliés par une courbe ; le premier plateau est déterminé pour un indicateur compris entre 0 et un seuil bas d'existence prédéfini, et est configuré pour caractériser un seuil haut d'accélération ; le deuxième plateau est déterminé pour un indicateur compris entre un seuil haut d'existence et 1, et est configuré pour caractériser l'accélération du véhicule cible.

3. Procédé selon la revendication 2, dans lequel le deuxième plateau est configuré pour caractériser l'accélération du véhicule cible additionnée d'une marge d'accélération prédéfinie.

4. Procédé selon l'une des revendications 1 à3, dans lequel, lorsque l'indicateur est compris entre le seuil bas d'existence et le seuil haut d'existence, l'accélération maximal du gabarit est fonction de la valeur de l'indicateur, de la valeur de l'accélération véhicule cible majoré d'une marge d'accélération prédéfinie

5. Procédé selon l'une des revendications 1 à 4, dans lequel la détermination est du gabarit (100) est mise à jour à chaque nouvelle détermination de l'accélération du véhicule cible.

6. Procédé selon l'une des revendications 1 à 4, dans lequel le calcul de l'indicateur pour le véhicule cible est mise à jour continuellement.

7. Dispositif (301) comprenant une mémoire (302) associée à au moins un processeur (303) configuré pour mettre en oeuvre le procédé selon l'une des revendication 1 à 6.

8. Véhicule terrestre à moteur comportant le dispositif selon la revendication 7.

9. Programme d'ordinateur comprenant des instructions adaptées pour l'exécution des étapes du procédé selon l'une des revendications 1 à 6 lorsque ledit programme est exécuté par au moins un processeur (303).

**Patentansprüche**

1. Verfahren zum autonomen Fahren eines motorisierten Landfahrzeugs, sogenanntes Ego-Fahrzeug, durch adaptive Geschwindigkeitsregelung basierend auf einer vorgegebenen Beschleunigung, wobei das Verfahren die Schritte umfasst:

    a) Bestimmen (201) einer Beschleunigung eines Zielfahrzeugs;
    b) Berechnen (202) eines Indikators für das Zielfahrzeug, der so konfiguriert ist, dass er eine Existenzwahrscheinlichkeit des Zielfahrzeugs charakterisiert;
    c) Bestimmung (203) einer maximalen Zielbeschleunigung aus dem Indikator und konfiguriert zum Begrenzen der Zielbeschleunigung;
    d) Ermittlung (204) der Geschwindigkeitsregelung aus der maximalen Sollbeschleunigung und der Sollbeschleunigung;

    Verfahren, bei dem die Bestimmung der maximalen Zielbeschleunigung durch Anwenden einer Schablone (100) auf den Indikator erfolgt, wobei die Schablone eine Funktion der Beschleunigung des Zielfahrzeugs ist.

2. Verfahren nach Anspruch 1, bei dem die Schablone (100) zwei durch eine Kurve verbundene Platten aufweist; das erste Plateau wird für einen Indikator zwischen 0 und einem vordefinierten niedrigen Existenzschwellenwert bestimmt und ist so konfiguriert, dass es einen hohen Beschleunigungsschwellenwert charakterisiert; Das zweite Plateau wird für einen Indikator zwischen einem hohen Existenzschwellenwert und 1 bestimmt und ist dazu konfiguriert, die Beschleunigung des Zielfahrzeugs zu charakterisieren.

3. Verfahren nach Anspruch 2, bei dem die zweite Platte so konfiguriert ist, dass sie die Beschleunigung des Zielfahrzeugs addiert zu einem vordefinierten Beschleunigungsspielraum charakterisiert.

4. Verfahren nach einem der Ansprüche 1 bis 3, bei dem, wenn der Indikator zwischen der niedrigen Existenzschwelle und der hohen Existenzschwelle liegt, die maximale Beschleunigung der Vorlage vom Wert des Indikators des Zielfahrzeugs abhängt Beschleunigungswert plus einem vordefinierten Beschleunigungsspielraum

5. Verfahren nach einem der Ansprüche 1 bis 4, bei dem die Bestimmung der Vorlage (100) mit jeder neuen Bestimmung der Beschleunigung des Zielfahrzeugs aktualisiert wird.

6. Verfahren nach einem der Ansprüche 1 bis 4, bei dem die Berechnung des Indikators für das Zielfahrzeug fortlaufend aktualisiert wird.

7. Vorrichtung (301), umfassend einen Speicher (302), dem mindestens ein Prozessor (303) zugeordnet ist, der zur Durchführung des Verfahrens nach einem der Ansprüche 1 bis 6 konfiguriert ist.

8. Motorisiertes Landfahrzeug mit der Vorrichtung nach Anspruch 7.

9. Computerprogramm mit Anweisungen, die zur Ausführung der Schritte des Verfahrens nach einem der Ansprüche 1 bis 6 geeignet sind, wenn das Programm von mindestens einem Prozessor (303) ausgeführt wird.

**Claims**

1. Method for autonomous driving of a motorized land vehicle, called ego-vehicle, by adaptive speed regulation based on a set acceleration, the method comprising the steps of:

   a) determining (201) an acceleration of a target vehicle;
   b) calculating (202) an indicator for the target vehicle configured to characterize a probability of existence of the target vehicle;
   c) determination (203) of a maximum target acceleration from the indicator and configured to limit the target acceleration;
   d) determination (204) of speed regulation from the maximum target acceleration and the target acceleration;

   method in which the determination of the maximum target acceleration is obtained by applying a template (100) to the indicator, the template being a function of the acceleration of the target vehicle.

2. Method according to claim 1, in which the template (100) has two plates connected by a curve; the first plateau is determined for an indicator between 0 and a predefined low existence threshold, and is configured to characterize a high acceleration threshold; the second plateau is determined for an indicator between a high existence threshold and 1, and is configured to characterize the acceleration of the target vehicle.

3. Method according to claim 2, in which the second plate is configured to characterize the acceleration of the target vehicle added to a predefined acceleration margin.

4. Method according to one of claims 1 to 3, in which, when the indicator is between the low existence threshold and the high existence threshold, the maximum acceleration of the template is a function of the value of the indicator, of the target vehicle acceleration value plus a predefined acceleration margin

5. Method according to one of claims 1 to 4, in which the determination of the template (100) is updated with each new determination of the acceleration of the target vehicle.

6. Method according to one of claims 1 to 4, in which the calculation of the indicator for the target vehicle is continuously updated.

7. Device (301) comprising a memory (302) associated with at least one processor (303) configured to implement the method according to one of claims 1 to 6.

8. Motorized land vehicle comprising the device according to claim 7.

9. Computer program comprising instructions adapted for the execution of the steps of the method according to one of claims 1 to 6 when said program is executed by at least one processor (303).

[Fig. 1]

[Fig. 2]

[Fig. 3]

**RÉFÉRENCES CITÉES DANS LA DESCRIPTION**

**Documents brevets cités dans la description**

- US 2019263402 A1
- GB 2571587 A
- DE 102006056629 A1